# EUROPEAN PATENT APPLICATION

(11) **EP 4 685 885 A1**
(43) Date of publication of application: **28.01.2026**
(21) Application number: 25180918.2
(22) Date of filing: 04.06.2025
(51) Int. Cl.: H01M 8/0297, H01M 8/0234, H01M 8/0273, H01M 8/1004

(54) **INTEGRATED MEMBRANE ASSEMBLY FOR AN ELECTROCHEMICAL CELL AND METHOD OF MAKING THE SAME**

(30) Priority: 25.07.2024 US 202463675419 P
(71) Applicant: New Hydrogen IP, LLC, Columbus, Indiana 47201 (US)
(72) Inventor: YAO, Fan, Shanghai (CN)
(74) Representative: Marks & Clerk Cummins

(57) **Abstract**

An electrochemical cell (310) includes an integrated membrane assembly (312), a first bipolar plate (316) arranged on a first side of the integrated membrane assembly, and a second bipolar plate (318) arranged on a second side of the integrated membrane assembly. The integrated membrane assembly includes a first gas diffusion layer (324), a second gas diffusion layer (326) spaced apart from the first gas diffusion layer, a membrane (322) located between the first gas diffusion layer and the second gas diffusion layer, and a plurality of bond members (314) adhered to the first gas diffusion layer or the second gas diffusion layer and respective frames (328, 330). The first bipolar plate is formed to include at least one first pressure relief channel (332), and the second bipolar plate is formed to include at least one second pressure relief channel (332).

## Description

### CROSS-REFERENCE TO RELATED APPLICATIONS

This nonprovisional application claims the benefit and priority, under 35 U.S.C. § 119(e) and any other applicable laws or statues, to U.S. Provisional Patent Application Serial No. 63/675,419 filed on July 25, 2024, the entire disclosure of which is hereby expressly incorporated herein by reference.

### TECHNICAL FIELD

The present disclosure relates to an integrated membrane assembly for an electrochemical cell and methods of making the integrated membrane assembly.

### BACKGROUND

Fuel cell systems are known for their efficient use of fuel to produce direct current electric energy to power mobile applications, such as, for example, vehicles, trains, buses, and trucks. Electrolyzer systems are known for their efficient use of water and electricity to produce hydrogen and oxygen. Typical fuel cells and electrolyzer cells include multi-component assemblies that enable electrochemical reactions, and are therefore, both referred to as electrochemical cells.

Assembly of electrochemical cells may be tedious due to the number of parts included in the electrochemical cells. Further, membranes of electrochemical cells may be prone to damage due to shear forces applied to the membranes. Thus, it may be advantageous to decrease the number of parts required in the assembly of electrochemical cells, as well as decrease shear forces applied to the membrane of electrochemical cells.

Therefore, the present disclosure is directed to an integrated membrane assembly for an electrochemical cell and methods of making the integrated membrane assembly.

### SUMMARY

Embodiments of the present disclosure are included to meet these and other needs.

In one aspect described herein, an electrochemical cell comprises an integrated membrane assembly, a first bipolar plate, and a second bipolar plate. The integrated membrane assembly includes a first gas diffusion layer, a second gas diffusion layer spaced apart from the first gas diffusion layer relative to a first axis, a membrane located between the first gas diffusion layer and the second gas diffusion layer, and a plurality of bond members adhered to the first gas diffusion layer or the second gas diffusion layer. The first bipolar plate is arranged on a first side of the integrated membrane assembly relative to the first axis. The first bipolar plate is formed to include at least one first pressure relief channel. The second bipolar plate is arranged on a second side of the integrated membrane assembly relative to the first axis. The second bipolar plate is formed to include at least one second pressure relief channel. Each of the plurality of bond members is located in a corresponding one of the at least one first pressure relief channel or the at least one second pressure relief channel to minimize forces acting upon the first and second gas diffusion layers by the first and second bipolar plates to thereby minimize shear forces applied to the membrane by the first and second gas diffusion layers.

In some embodiments, the integrated membrane assembly may further include a first frame and a second frame spaced apart from the first frame relative to the first axis. In some embodiments, the first frame may be located on each side of the first gas diffusion layer relative to a second axis that is perpendicular to the first axis and the second frame may be located on each side of the second gas diffusion layer relative to the second axis.

In some embodiments, a first interface may be formed between the first gas diffusion layer and the first frame, and wherein a second interface may be formed between the second gas diffusion layer and the second frame. In some embodiments, the plurality of bond members may include a top bond member and a bottom bond member, and wherein the top bond member may be adhered to the first gas diffusion layer and the first frame at the first interface and the bottom bond member may be adhered to the second gas diffusion layer and the second frame at the second interface.

In some embodiments, the top bond member may be located on an outer surface of the first gas diffusion layer and an outer surface of the first frame to locate the first gas diffusion layer and the first frame between the top bond member and the membrane relative to the first axis. In some embodiments, the bottom bond member may be located on an outer surface of the second gas diffusion layer and an outer surface of the second frame to locate the second gas diffusion layer and the second frame between the bottom bond member and the membrane relative to the first axis.

In some embodiments, the top bond member may be received in the at least one first pressure relief channel of the first bipolar plate and the bottom bond member may be received in the at least one second pressure relief channel of the second bipolar plate. In some embodiments, the top bond member may not contact the first bipolar plate and the bottom bond member may not contact the second bipolar plate. In some embodiments, the top bond member and the bottom bond member may be aligned with one another along the second axis.

In some embodiments, the plurality of bond members may include a first top bond member and a second top bond member spaced apart from one another relative to the second axis and a first bottom bond member and a second bottom bond member spaced apart from one another relative to the second axis. In some embodiments, the first top bond member may be coupled to the first frame and the first gas diffusion layer at a first interface thereof, the second top bond member may be coupled to the first frame and the first gas diffusion layer at a second interface thereof, the first bottom bond member may be coupled to the second frame and the second gas diffusion layer at a first interface thereof, and the second bottom bond member may be coupled to the second frame and the second gas diffusion layer at a second interface thereof.

In some embodiments, the at least one first pressure relief channel may include a first top pressure relief channel that receives the first top bond member and a second top pressure relief channel that receives the second top bond member. In some embodiments, the at least one second pressure relief channel may include a first bottom pressure relief channel that receives the first bottom bond member and a second bottom pressure relief channel that receives the second bottom bond member.

In some embodiments, each of the plurality of bond members may not contact the first bipolar plate or the second bipolar plate. In some embodiments, the first bipolar plate may include a first surface and a second surface opposite the first surface relative to the first axis, the at least one first pressure relief channel may extend into the first bipolar plate from the second surface toward the first surface. In some embodiments, the second bipolar plate may include a first surface and a second surface opposite the first surface of the second bipolar plate relative to the first axis, the at least one second pressure relief channel may extend into the second bipolar plate from the first surface of the second bipolar plate toward the second surface of the second bipolar plate.

According to a further aspect of the present disclosure, a method of assembling an electrochemical cell comprises stacking a first frame, a membrane, and a second frame on top of one another; fixing the first frame, the membrane, and the second frame to one another to form a membrane-frame component; stacking a first gas diffusion layer, the membrane-frame component, and a second gas diffusion layer on top of one another; fixing the first gas diffusion layer, the membrane-frame component, and the second gas diffusion layer to one another to form an integrated membrane assembly; adhering at least one top bond member to outer surfaces of the first frame and the first gas diffusion layer of the integrated membrane assembly; adhering at least one bottom bond member to outer surfaces of the second frame and the second gas diffusion layer of the integrated membrane assembly; coupling a first bipolar plate to the integrated membrane assembly so that the at least one top bond member is received by at least one first pressure relief channel formed in the first bipolar plate; and coupling a second bipolar plate to the integrated membrane assembly so that the at least one bottom bond member is received by at least one second pressure relief channel formed in the second bipolar plate.

In some embodiments, the step of fixing the first gas diffusion layer, the membrane-frame component, and the second gas diffusion layer to one another may include forming a first interface between the first gas diffusion layer and the first frame and forming a second interface between the second gas diffusion layer and the second frame.

In some embodiments, the step of adhering at least one top bond member to outer surfaces of the first frame and the first gas diffusion layer may include adhering the at least one top bond member to the first frame and the first gas diffusion layer at the first interface.

In some embodiments, the step of adhering at least one bottom bond member to outer surfaces of the second frame and the second gas diffusion layer may include adhering the at least one bottom bond member to the second frame and the second gas diffusion layer at the second interface.

In some embodiments, the at least one top bond member may not contact the first bipolar plate and the at least one bottom bond member may not contact the second bipolar plate. In some embodiments, the at least one top bond member and the at least one bottom bond member may be aligned with one another.

In some embodiments, the method may further comprise minimizing forces acting upon the first and second gas diffusion layers by the first and second bipolar plates via the at least one first pressure relief channel and the at least one second pressure relief channel.

### BRIEF DESCRIPTION OF THE DRAWINGS

FIG. 1A is a schematic view of an exemplary fuel cell system including an air delivery system, a hydrogen delivery system, and a fuel cell module including a stack of multiple fuel cells;
FIG. 1B is a cutaway view of an exemplary fuel cell system including an air delivery system, hydrogen delivery systems, and a plurality of fuel cell modules each including multiple fuel cell stacks;
FIG. 1C is a perspective view of an exemplary repeating unit of a fuel cell stack of the fuel cell system of FIG. 1A;
FIG. 1D is a cross-sectional view of an exemplary repeating unit of the fuel cell stack of FIG. 1C;
FIG. 2A is perspective view of an electrolyzer cell stack according to the present disclosure;
FIG. 2B is a schematic view of an electrolysis system configured to utilize the electrolyzer cell stack of FIG. 2A;
FIG. 2C is a schematic view of an additional portion of the electrolysis system of FIG. 2B;
FIG. 3A is an exploded view of a traditional electrochemical cell;
FIG. 3B is a side view of the traditional electrochemical cell of FIG. 3A;
FIG. 3C is a diagrammatic view of the traditional electrochemical cell of FIG. 3B over time;
FIG. 4 is a side view of an electrochemical cell of the present disclosure, the electrochemical cell including a membrane assembly arranged between two bipolar plates;
FIG. 5 is an exploded view of the membrane assembly of the electrochemical cell of FIG. 4, the membrane assembly including, from top to bottom, a first gas diffusion layer, a first frame, a membrane, a second frame, and a second gas diffusion layer;
FIG. 6 is an exploded view of the first frame, the membrane, and the second frame of the membrane assembly of FIG. 5 showing that the components are adhered together to form a membrane-frame component;
FIG. 7 is an exploded view of the first gas diffusion layer, the membrane-frame component, and the second gas diffusion layer of the membrane assembly of FIG. 5 showing that the components are adhered together to form the membrane assembly;
FIG. 8 is an exploded view of the electrochemical cell of FIG. 4 showing that the bipolar plates are arranged on both sides of the membrane assembly to form the electrochemical cell;
FIG. 9 is another diagrammatic view of the electrochemical cell of FIG. 4;
FIG. 10 is a diagrammatic view of an alternative membrane assembly;
FIG. 11 is a diagrammatic view of an alternative membrane assembly;
FIG. 12 is a diagrammatic view of an alternative membrane assembly;
FIG. 13 is a diagrammatic view of an alternative membrane assembly; and
FIG. 14 is a diagrammatic view of an alternative membrane assembly.

### DETAILED DESCRIPTION

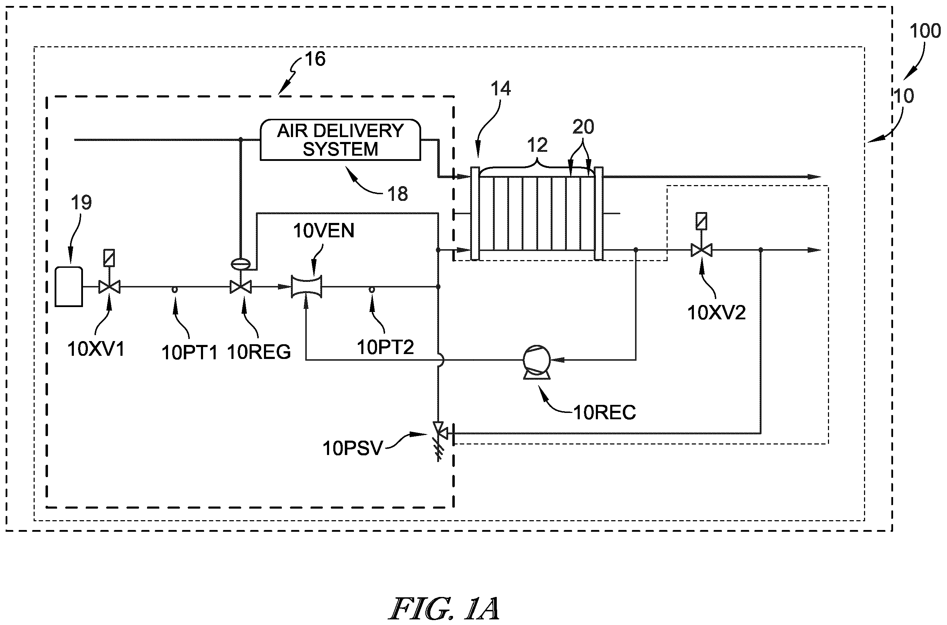

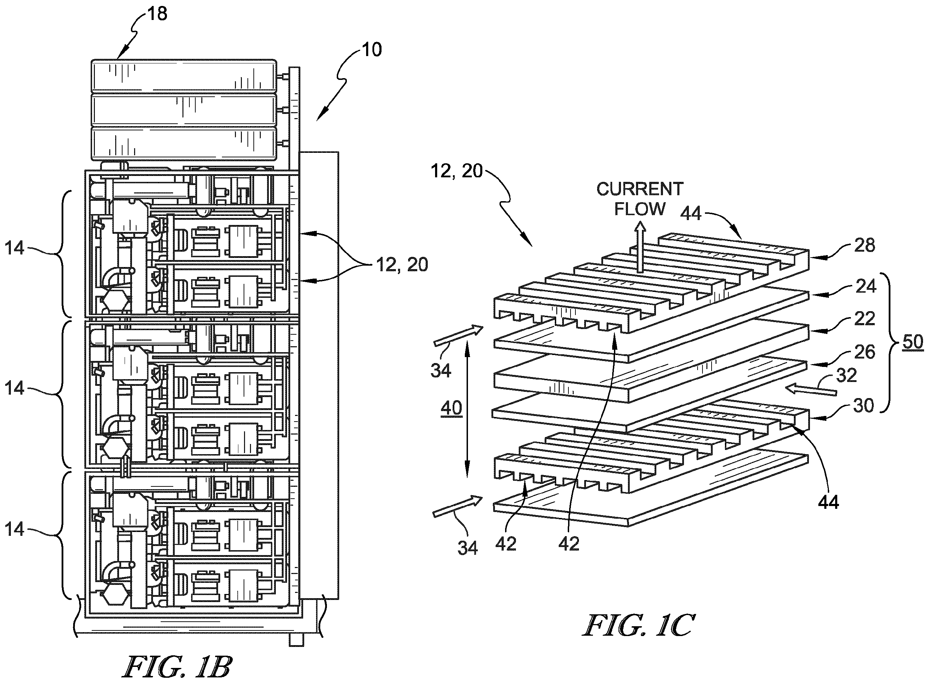

As shown in FIG. 1A, fuel cell systems 10 often include one or more fuel cell stacks 12 or fuel cell modules 14 connected to a balance of plant (BOP) 16, including various components, to support the electrochemical conversion, generation, and/or distribution of electrical power to help meet modern day industrial and commercial needs in an environmentally friendly way. As shown in FIGS. 1B and 1C, fuel cell systems 10 may include fuel cell stacks 12 comprising a plurality of individual fuel cells 20. Each fuel cell stack 12 may house a plurality of fuel cells 20 assembled together in series and/or in parallel. The fuel cell system 10 may include one or more fuel cell modules 14, as shown in FIGS. 1A and 1B. In some embodiments, the fuel cell system 10 may comprise one or more fuel cell stacks 12.

Each fuel cell module 14 may include a plurality of fuel cell stacks 12 and/or a plurality of fuel cells 20. The fuel cell module 14 may also include a suitable combination of associated structural elements, mechanical systems, hardware, firmware, and/or software that is employed to support the function and operation of the fuel cell module 14. Such items include, without limitation, piping, sensors, regulators, current collectors, seals, and insulators.

The fuel cells 20 in the fuel cell stacks 12 may be stacked together to multiply and increase the voltage output of a single fuel cell stack 12. The number of fuel cell stacks 12 in a fuel cell system 10 can vary depending on the amount of power required to operate the fuel cell system 10 and meet the power need of any load. The number of fuel cells 20 in a fuel cell stack 12 can vary depending on the amount of power required to operate the fuel cell system 10 including the fuel cell stacks 12.

The number of fuel cells 20 in each fuel cell stack 12 or fuel cell system 10 can be any number. For example, the number of fuel cells 20 in each fuel cell stack 12 may range from about 100 fuel cells to about 1000 fuel cells, including any specific number or range of number of fuel cells 20 comprised therein (e.g., about 200 to about 800). In an embodiment, the fuel cell system 10 may include about 20 to about 1000 fuel cells stacks 12, including any specific number or range of number of fuel cell stacks 12 comprised therein (e.g., about 200 to about 800). The fuel cells 20 in the fuel cell stacks 12 within the fuel cell module 14 may be oriented in any direction to optimize the operational efficiency and functionality of the fuel cell system 10.

The fuel cells 20 in the fuel cell stacks 12 may be any type of fuel cell 20. The fuel cell 20 may be a polymer electrolyte membrane or proton exchange membrane (PEM) fuel cell, an anion exchange membrane fuel cell (AEMFC), an alkaline fuel cell (AFC), a molten carbonate fuel cell (MCFC), a direct methanol fuel cell (DMFC), a regenerative fuel cell (RFC), a phosphoric acid fuel cell (PAFC), or a solid oxide fuel cell (SOFC). In an exemplary embodiment, the fuel cells 20 may be a polymer electrolyte membrane or proton exchange membrane (PEM) fuel cell or a solid oxide fuel cell (SOFC).

In an embodiment shown in FIG. 1C, the fuel cell stack 12 includes a plurality of proton exchange membrane (PEM) fuel cells 20. Each fuel cell 20 includes a single membrane electrode assembly (MEA) 22 and a gas diffusion layer (GDL) 24, 26 on either or both sides of the membrane electrode assembly (MEA) 22 (see FIG. 1C). The fuel cell 20 further includes a bipolar plate (BPP) 28, 30 on the external side of each gas diffusion layer (GDL) 24, 26, as shown in FIG. 1C. The above-mentioned components, in particular the bipolar plate 30, the gas diffusion layer (GDL) 26, the membrane electrode assembly (MEA) 22, and the gas diffusion layer (GDL) 24 comprise a single repeating unit 50.

The bipolar plates (BPP) 28, 30 are responsible for the transport of reactants, such as fuel 32 (e.g., hydrogen) or oxidant 34 (e.g., oxygen, air), and cooling liquid 36 (e.g., coolant and/or water) in a fuel cell 20. The bipolar plates (BPP) 28, 30 can uniformly distribute reactants 32, 34 to an active area 40 of each fuel cell 20 through oxidant flow fields 42 and/or fuel flow fields 44 formed on outer surfaces of the bipolar plates (BPP) 28, 30. The active area 40, where the electrochemical reactions occur to generate electrical power produced by the fuel cell 20, is centered, when viewing the stack 12 from a top-down perspective, within the membrane electrode assembly (MEA) 22, the gas diffusion layers (GDL) 24, 26, and the bipolar plates (BPP) 28, 30.

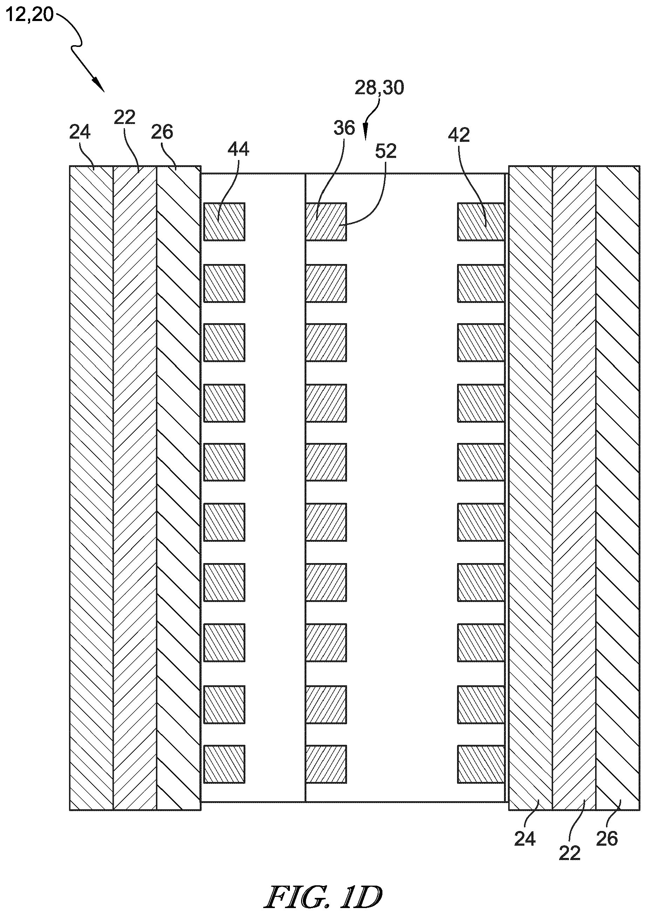

The bipolar plates (BPP) 28, 30 may each be formed to have reactant flow fields 42, 44 formed on opposing outer surfaces of the bipolar plate (BPP) 28, 30, and formed to have coolant flow fields 52 located within the bipolar plate (BPP) 28, 30, as shown in FIG. 1D. For example, the bipolar plate (BPP) 28, 30 can include fuel flow fields 44 for transfer of fuel 32 on one side of the plate 28, 30 for interaction with the gas diffusion layer (GDL) 26. The bipolar plate (BPP) 28, 30 also includes oxidant flow fields 42 for transfer of oxidant 34 on the second, opposite side of the plate 28, 30 for interaction with the gas diffusion layer (GDL) 24.

As shown in FIG. 1D, the bipolar plates (BPP) 28, 30 can further include coolant flow fields 52 formed within the plate (BPP) 28, 30, generally centrally between the opposing outer surfaces of the plate (BPP) 28, 30. The coolant flow fields 52 facilitate the flow of cooling liquid 36 through the bipolar plate (BPP) 28, 30 in order to regulate the temperature of the plate (BPP) 28, 30 materials and the reactants. The bipolar plates (BPP) 28, 30 are compressed against adjacent gas diffusion layers (GDL) 24, 26 to isolate and/or seal one or more reactants 32, 34 within their respective pathways 44, 42 to maintain electrical conductivity, which is required for robust operation of the fuel cell 20 (see FIGS. 1C and 1D).

The fuel cell system 10 described herein may be used in stationary and/or immovable power systems, such as industrial applications and power generation plants. The fuel cell system 10 may also be implemented in conjunction with an air delivery system 18. Additionally, the fuel cell system 10 may also be implemented in conjunction with a hydrogen delivery system and/or a source of hydrogen 19 such as a pressurized tank, including a gaseous pressurized tank, cryogenic liquid storage tank, chemical storage, physical storage, stationary storage, an electrolysis system, or an electrolyzer. In one embodiment, the fuel cell system 10 is connected and/or attached in series or parallel to a hydrogen delivery system and/or a source of hydrogen 19, such as one or more hydrogen delivery systems and/or sources of hydrogen 19 in the BOP 16 (see FIG. 1A). In another embodiment, the fuel cell system 10 is not connected and/or attached in series or parallel to a hydrogen delivery system and/or a source of hydrogen 19.

In some embodiments, the fuel cell system 10 may include an on/off valve 10XV1, a pressure transducer 10PT1, a mechanical regulator 10REG, and a venturi 10VEN arranged in operable communication with each other and downstream of the hydrogen delivery system and/or source of hydrogen 19, as shown in FIG. 1A. The pressure transducer 10PT1 may be arranged between the on/off valve 10XV1 and the mechanical regulator 10REG. In some embodiments, a proportional control valve may be utilized instead of a mechanical regulator 10REG. In some embodiments, a second pressure transducer 10PT2 is arranged downstream of the venturi 10VEN, which is downstream of the mechanical regulator 10REG.

In some embodiments, the fuel cell system 10 may further include a recirculation pump 10REC downstream of the stack 12 and operably connected to the venturi 1OVEN. The fuel cell system 10 may also include a further on/off valve 10XV2 downstream of the stack 12, and a pressure transfer valve 10PSV, as shown in FIG. 1A.

The present fuel cell system 10 may also be comprised in mobile applications. In an exemplary embodiment, the fuel cell system 10 is in a vehicle and/or a powertrain 100. A vehicle 100 comprising the present fuel cell system 10 may be an automobile, a pass car, a bus, a truck, a train, a locomotive, an aircraft, a light duty vehicle, a medium duty vehicle, or a heavy-duty vehicle. Types of vehicles 100 can also include, but are not limited to commercial vehicles and engines, trains, trolleys, trams, planes, buses, ships, boats, and other known vehicles, as well as other machinery and/or manufacturing devices, equipment, installations, among others.

The vehicle and/or a powertrain 100 may be used on roadways, highways, railways, airways, and/or waterways. The vehicle 100 may be used in applications including but not limited to off highway transit, bobtails, and/or mining equipment. For example, an exemplary embodiment of mining equipment vehicle 100 is a mining truck or a mine haul truck.

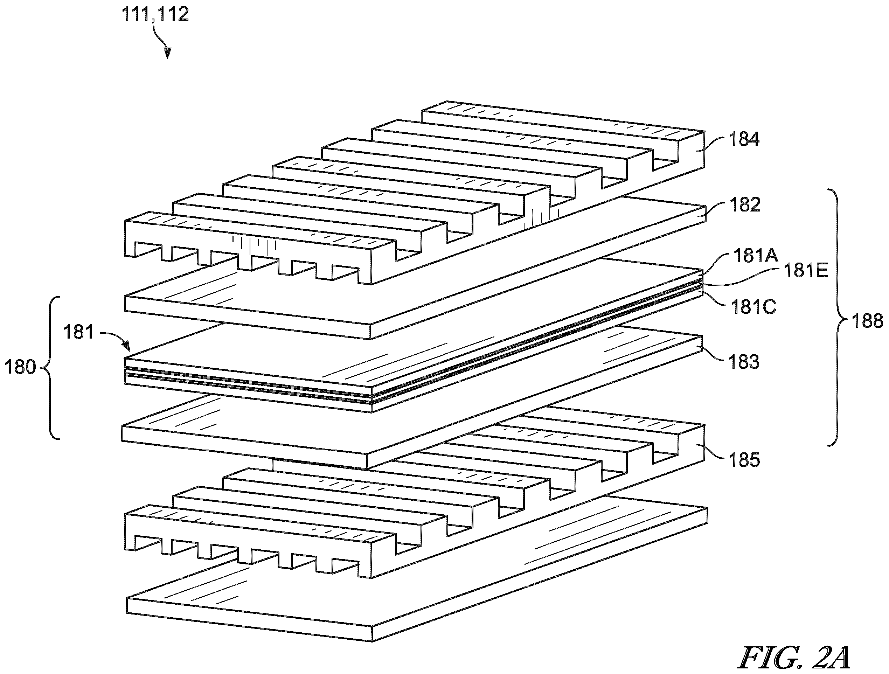

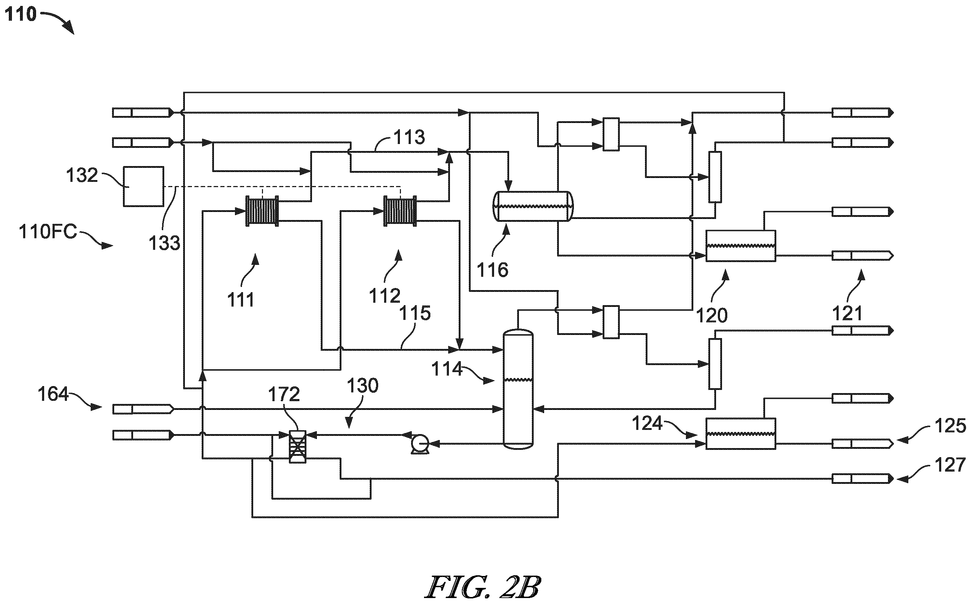

As shown in FIGS. 2A and 2B, electrolysis systems 110 are typically configured to utilize water and electricity to produce hydrogen and oxygen. An electrolysis system 110 typically includes one or more electrolyzer cells 180 that utilize electricity to chemically produce substantially pure hydrogen 113 and oxygen 115 from deionized water 130. Often the electrical source for the electrolysis systems 110 is produced from power or energy generation systems, including renewable energy systems such as wind, solar, hydroelectric, and geothermal sources for the production of green hydrogen. In turn, the pure hydrogen produced by the electrolysis systems 110 is often utilized as a fuel or energy source for those same power generation systems, such as fuel cell systems. Alternatively, the pure hydrogen produced by the electrolysis systems 110 may be stored for later use.

The typical electrolyzer cell 180, or electrolytic cell, is comprised of multiple assemblies compressed and bound into a single assembly, and multiple electrolyzer cells 180 may be stacked relative to each other, along with bipolar plates (BPP) 184, 185 therebetween, to form an electrolyzer cell stack (for example, electrolyzer cell stacks 111, 112 in FIG. 2B). Each electrolyzer cell stack 111, 112 may house a plurality of electrolyzer cells 180 connected together in series and/or in parallel. The number of electrolyzer cell stacks 111, 112 in the electrolysis systems 110 can vary depending on the amount of power required to meet the power need of any load (e.g., fuel cell stack). The number of electrolyzer cells 180 in an electrolyzer cell stack 111, 112 can vary depending on the amount of power required to operate the electrolysis systems 110 including the electrolyzer cell stack 111, 112.

An electrolyzer cell 180 includes a multi-component membrane electrode assembly (MEA) 181 that has an electrolyte 181E, an anode 181A, and a cathode 181C. Typically, the anode 181A, cathode 181C, and electrolyte 181E of the membrane electrode assembly (MEA) 181 are configured in a multi-layer arrangement that enables the electrochemical reaction to produce hydrogen and/or oxygen via contact of the water with one or more gas diffusion layers 182, 183. The gas diffusion layers (GDL) 182, 183, which may also be referred to as porous transport layers (PTL), are typically located on one or both sides of the MEA 181. Bipolar plates (BPP) 184, 185 often reside on either side of the GDLs 182, 183 and separate the individual electrolyzer cells 180 of the electrolyzer cell stack 111, 112 from one another. One bipolar plate 185 and the adjacent gas diffusion layers 182, 183 and MEA 181 can form a repeating unit 188.

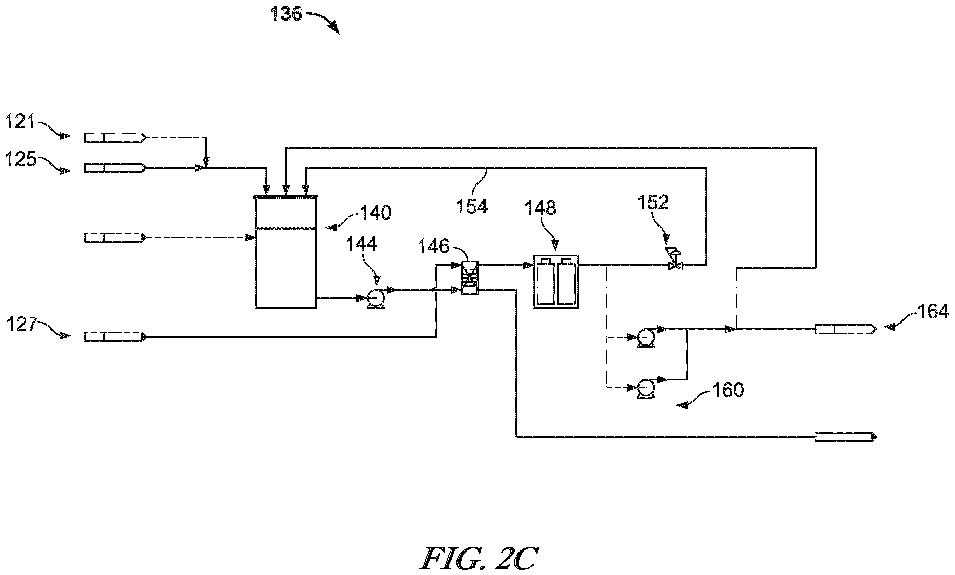

As shown in FIGS. 2B and 2C, an exemplary electrolysis system 110 can include two electrolyzer cell stacks 111, 112 and a fluidic circuit 110FC including the various fluidic pathways shown in FIGS. 2B and 2C that is configured to circulate, inject, and purge fluid and other components to and from the electrolysis systems 110. A person skilled in the art would understand that one or a variety of a number of components within the fluidic circuit 110FC, as well as more or less than two electrolyzer cell stacks 111, 112, may be utilized in the electrolysis systems 110. For example, the electrolysis systems 110 may include one electrolyzer cell stack 111, and in other examples, the electrolysis systems 110 may include three or more electrolyzer cell stacks.

The electrolysis systems 110 may include one or more types of electrolyzer cell stacks 111, 112 therein. In the illustrated embodiment, a polymer electrolyte membrane (PEM) electrolyzer cell 180 may be utilized in the stacks 111, 112. A PEM electrolyzer cell 180 typically operates at about 4°C to about 150°C, including any specific or range of temperatures comprised therein. A PEM electrolyzer cell 180 also typically functions at about 100 bar or less, but can go up to about 1000 bar (including any specific or range of pressures comprised therein), which reduces the total energy demand of the system. A standard electrochemical reaction that occurs in a PEM electrolyzer cell 180 to produce hydrogen is as follows.
- Anode: 2H₂O → O₂ + 4H⁺ + 4e⁻
- Cathode: 4H⁺ + 4e⁻ → 2H₂
- Overall: 2H₂O (liquid) → 2H₂ + O₂

Additionally, a solid oxide electrolyzer cell 180 may be utilized in the electrolysis systems 110. A solid oxide electrolyzer cell 180 will function at about 500°C to about 1000°C, including any specific or range of temperatures comprised therein. A standard electrochemical reaction that occurs in a solid oxide electrolyzer cell 180 to produce hydrogen is as follows.
- Anode: 2O²⁻ → O₂ + 4e⁻
- Cathode: 2H₂O → 4e⁻+ 2H₂ + 2O²⁻
- Overall: 2H₂O (liquid) → 2H₂ + O₂

Moreover, an AEM electrolyzer cell 180 may be utilized, which uses an alkaline media. An exemplary AEM electrolyzer cell 180 is an alkaline electrolyzer cell 180. Alkaline electrolyzer cells 180 comprise aqueous solutions, such as potassium hydroxide (KOH) and/or sodium hydroxide (NaOH), as the electrolyte. Alkaline electrolyzer cells 180 typically perform at operating temperatures ranging from about 0°C to about 150°C, including any specific or range of temperatures comprised therein. Alkaline electrolyzer cell 180 generally operate at pressures ranging from about 1 bar to about 100 bar, including any specific or range of pressures comprised therein. A typical hydrogen-generating electrochemical reaction that occurs in an alkaline electrolyzer cell 180 is as follows.
- Anode: 4OH⁻ → O₂ + 2H₂O + 4e⁻
- Cathode: 4H₂O + 4e⁻ → 2H₂ + 4OH⁻
- Overall: 2 H₂O → 2H₂ + O₂

As shown in FIG. 2B, the electrolyzer cell stacks 111, 112 include one or more electrolyzer cells 180 that utilize electricity to chemically produce substantially pure hydrogen and oxygen from water. In turn, the pure hydrogen produced by the electrolyzer may be utilized as a fuel or energy source. As shown in FIG. 2B, the electrolyzer cell stack 111, 112 outputs the produced hydrogen along a fluidic connecting line 113 to a hydrogen separator 116, and also outputs the produced oxygen along a fluidic connecting line 115 to an oxygen separator 114.

The hydrogen separator 116 may be configured to output pure hydrogen gas and also send additional output fluid to a hydrogen drain tank 120, which then outputs fluid to a deionized water drain 121. The oxygen separator 114 may output fluid to an oxygen drain tank 124, which in turn outputs fluid to a deionized water drain 125. A person skilled in the art would understand that certain inputs and outputs of fluid may be pure water or other fluids such as coolant or byproducts of the chemical reactions of the electrolyzer cell stacks 111, 112. For example, oxygen and hydrogen may flow away from the cell stacks 111, 112 to the respective separators 114, 116. The system 110 may further include a rectifier 132 configured to convert electricity 133 flowing to the cell stacks 111, 112 from alternating current (AC) to direct current (DC).

The deionized water drains 121, 125 each output to a deionized water tank 140, which is part of a polishing loop 136 of the fluidic circuit 110FC, as shown in FIG. 2C. Water with ion content can damage electrolyzer cell stacks 111, 112 when the ionized water interacts with internal components of the electrolyzer cell stacks 111, 112. The polishing loop 136, shown in greater detail in FIG. 2C, is configured to deionize the water such that it may be utilized in the cell stacks 111, 112 and not damage the cell stacks 111, 112.

In the illustrated embodiment, the deionized water tank 140 outputs fluid, in particular water, to a deionized water polishing pump 144. The deionized water polishing pump 144 in turn outputs the water to a water polishing heat exchanger 146 for polishing and treatment. The water then flows to a deionized water resin tank 148.

Coolant is directed through the electrolysis systems 110, in particular through a deionized water heat exchanger 172 that is fluidically connected to the oxygen separator 114. The coolant used to cool said water may also be subsequently fed to the water polishing heat exchanger 146 via a coolant input 127 for polishing. The coolant is then output back to the deionized water heat exchanger 172 for cooling the water therein.

After the water is output from the deionized water polishing heat exchanger 146 and subsequently to the deionized water resin tank 148, a portion of the water may be fed to deionized water high pressure feed pumps 160. Another portion of the water may be fed to a deionized water pressure control valve 152, as shown in FIG. 2C. The portion of the water that is fed to the deionized water pressure control valve 152 flows through a recirculation fluidic connection 154 that allows the water to flow back to the deionized water tank 140 for continued polishing.

In some embodiments, the electrolysis systems 110 may increase deionized water skid for polishing water flow to flush out ions within the water at a faster rate. The portion of the water that is fed to the deionized water high pressure feed pumps 160 is then output to a deionized water feed 164, which then flows into the oxygen separator 114 for recirculation and eventual reusage in the electrolyzer cell stacks 111, 112. This process may then continuously repeat.

The electrolysis systems 110 described herein may be used in stationary and/or immovable power systems, such as industrial applications and power generation plants. The electrolysis systems 110 may also be implemented in conjunction with other electrolysis systems 110.

The present electrolysis systems 110 may be comprised in mobile applications. The electrolysis systems 110 may be in the vehicle or the powertrain 100. The vehicle or powertrain 100 comprising the electrolysis systems 110 may be an automobile, a pass car, a bus, a truck, a train, a locomotive, an aircraft, a light duty vehicle, a medium duty vehicle, or a heavy-duty vehicle.

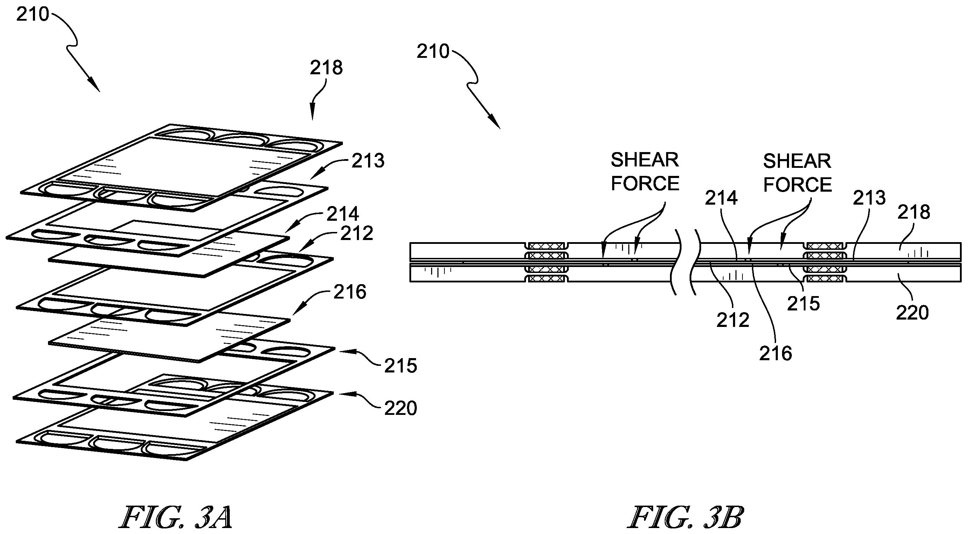

A traditional electrochemical cell 210 is shown in FIGS. 3A-3C. The electrochemical cell 210 includes a membrane 212, gas diffusion layers 214, 216 on both sides of the membrane 212, frames 213, 215 on both sides of the gas diffusion layers 214, 216, and bipolar plates 218, 220 on both sides of the gas diffusion layers 214, 216, as shown in FIGS. 3A and 3B. The electrochemical cell 210 is, thus, formed of seven components that must be properly aligned and positioned relative to one another during assembly. In traditional electrochemical cells 210, an assembly process for a stack of 424 electrochemical cells 210 may require about 2,544 steps and parts. Such an assembly process is inconvenient and time consuming.

Further, in traditional electrochemical cells 210, damage to the membrane 212 may occur due to shearing of the gas diffusion layers 214, 216. In other words, pressure and friction applied to the membrane 212 from the gas diffusion layers 214, 216 may cause damage to the membrane 212. Shearing may negatively impact the life and performance of the electrochemical cell 210. For example, damage to the membrane 212 increases a risk of cross-leakage between the anode and cathode chambers.

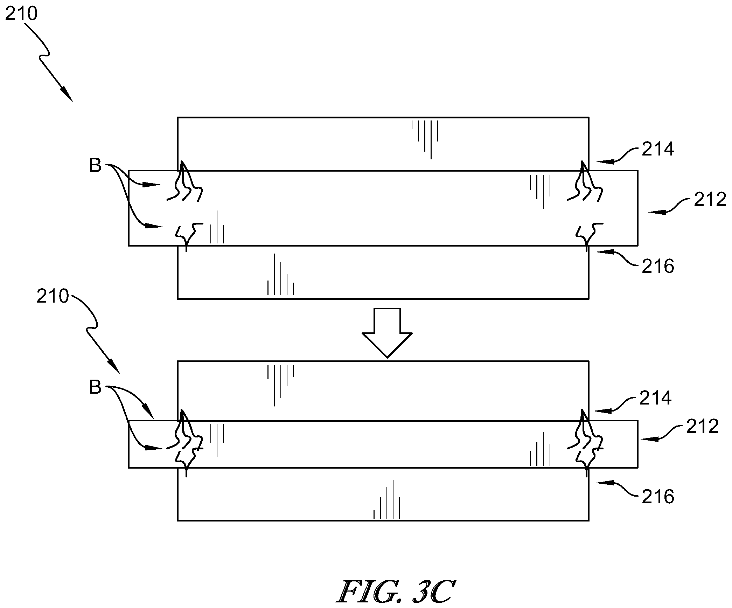

Traditional gas diffusion layers 214, 216 are sintered from about 20-micron titanium metal fibers. After cutting, these fibers may form edge burs B at edges of the gas diffusion layers 214, 216, as shown in FIG. 3C. Although the burs B are physically flattened prior to assembly, after assembly and operation, the burs B may form independent free single fiber filaments at the edges of the gas diffusion layers 214, 216, which may pierce the membrane 212, as shown in FIG. 3C. After the electrochemical cell 210 has been in operation for a period of time, the membrane 212 may gradually decompose under water, acid, hydrogen, and/or oxygen organic matter, which may make the membrane 212 thinner, as shown in FIG. 3C. Then, the burs B at the edges of the gas diffusion layers 214, 216 may more easily pierce the membrane 212 to form a short circuit between the burs B such that the membrane 212 may burn through under high current.

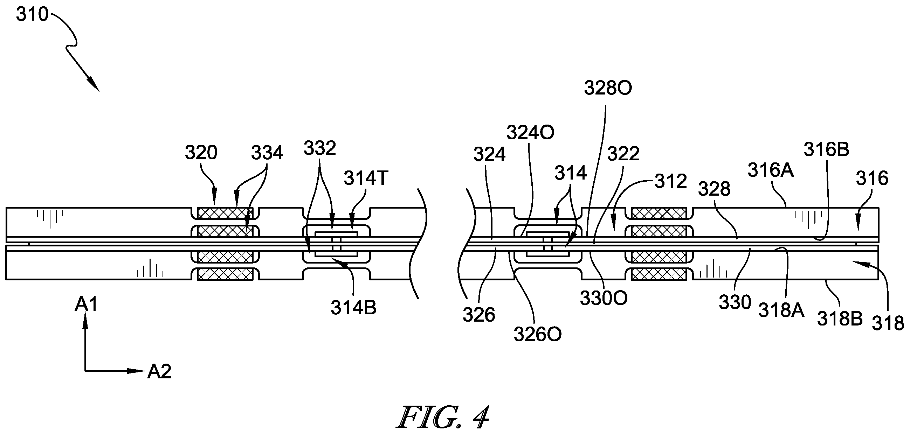

The present disclosure provides an electrochemical cell 310 including an integrated membrane assembly 312, a plurality of bond members 314, a first bipolar plate 316, and a second bipolar plate 318, as shown in FIG. 4. The plurality of bond members 314 may form part of the integrated membrane assembly 312. The electrochemical cell 310 also includes a plurality of gaskets 320 for sealing. In some embodiments, the electrochemical cell 310 is a fuel cell (e.g., a proton exchange membrane (PEM) fuel cell or a solid oxide fuel cell (SOFC)), and in other embodiments, the electrochemical cell 310 is not a fuel cell. In some embodiments, the electrochemical cell 310 is an electrolyzer cell, and in other embodiments, the electrochemical cell 310 is not an electrolyzer cell. The electrochemical cell 310 may be a fuel cell, such as the fuel cell 20 described above, or an electrolyzer cell, such as the electrolyzer cell 180 as described above.

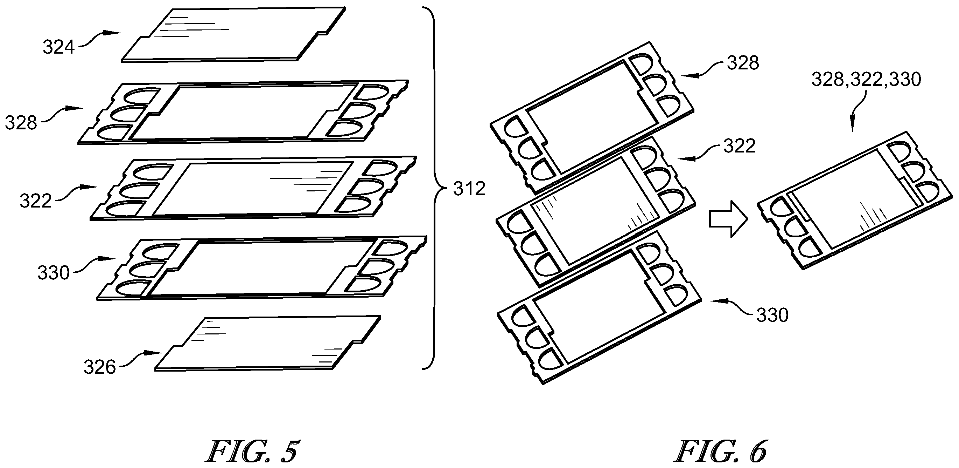

Illustratively, the membrane assembly 312 of the electrochemical cell 310 includes a membrane 322, a first gas diffusion layer 324, a second gas diffusion layer 326, a first frame 328, and/or a second frame 330, as shown in FIGS. 4 and 5. The first gas diffusion layer 324 and the second gas diffusion layer 326 are located on opposing sides of the membrane 322. The first frame 328 and the second frame 330 are located on opposing sides of the membrane 322.

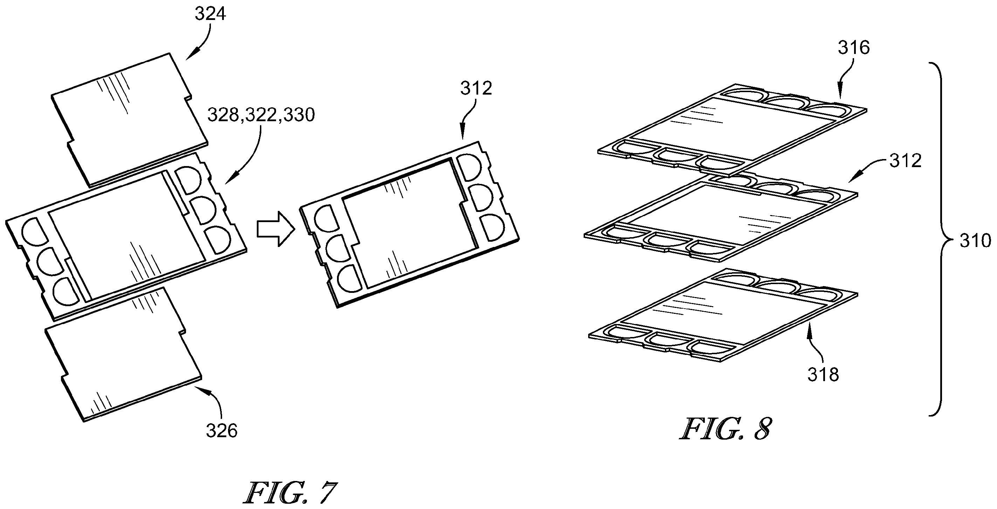

In illustrative embodiments, the membrane assembly 312 is integrated into a single component, as shown in FIG. 7. Such integration makes an assembly process of a stack of numerous electrochemical cells 310, such as a stack of about 424 electrochemical cells 310, more convenient. Because the membrane assembly 312 is integrated into a single component, the electrochemical cell 310 is formed of three components that must be properly aligned and positioned relative to one another during assembly (i.e., the first bipolar plate 316, the membrane assembly 312, and the second bipolar plate 318, as shown in FIG. 8). For example, with the integrated membrane assembly 312, the assembly process of a stack of 424 electrochemical cells 310 may require 848 steps and parts. Thus, the integrated membrane assembly 312 provides about a 66.66% reduction in the number of steps and parts required during the assembly process. The integrated membrane assembly 312 improves production efficiency, reduces errors in the assembly process, reduces warranty requirements of bipolar plates 316, 318, and improves consistency between different electrochemical cells 310.

As shown in FIG. 4, the first bipolar plate 316 and the second bipolar plate 318 are spaced apart from one another along a first axis A1. The membrane assembly 312 is arranged between the first bipolar plate 316 and the second bipolar plate 318 relative to the first axis A1. The first gas diffusion layer 324 and the second gas diffusion layer 326 are spaced apart from one another along the first axis A1 to locate the membrane 322 therebetween. The first frame 328 and the second frame 330 are spaced apart from one another along the first axis A1 to locate the membrane 322 therebetween.

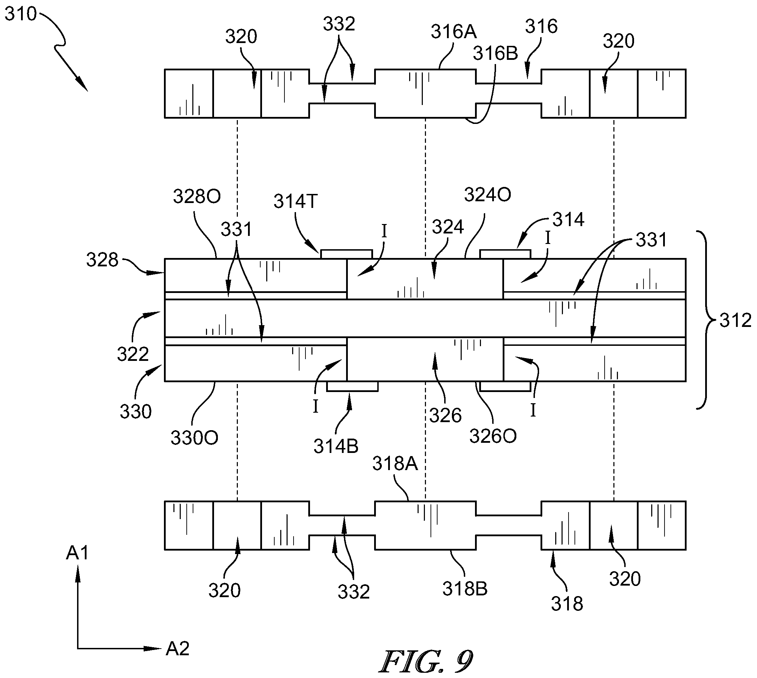

In some embodiments, the frames 328, 330 are formed of polyethylene naphthalate (PEN). In some embodiments, the frames 328, 330 are formed of polyethylene terephthalate (PET), such as biaxially oriented polyethylene terephthalate (BOPET). The frames 328, 330 interface with the bipolar plates 316, 318 arranged above and below the frames 328, 330 relative to the first axis A1, as shown in FIG. 9. The bipolar plates 316, 318 may be any of the bipolar plates 28, 30, 184, 185, as described above. The frames 328, 330 also interface with the gas diffusion layers 324, 326. The gas diffusion layers 324, 326 may be any of the gas diffusion layers 24, 26, 182, 183, as described above.

The plurality of bond members 314 includes at least two top bond members 314T and at least two bottom bond members 314B, as shown in FIGS. 4 and 9. The at least two top bond members 314T are spaced apart from one another along a second axis A2 that is perpendicular to the first axis A1. The at least two bottom bond members 314B are spaced apart from one another along the second axis A2. The at least two top bond members 314T are spaced apart from the at least two bottom bond members 314B along the first axis A1.

The at least two top bond members 314T are located on an outer surface 328O of the first frame 328 and an outer surface 324O the first gas diffusion layer 324, as shown in FIGS. 4 and 9. In this way, the first frame 328 and the first gas diffusion layer 324 are located between the at least two top bond members 314T and the membrane 322 relative to the first axis A1.

The at least two bottom bond members 314B are located on an outer surface 330O of the second frame 330 and an outer surface 326O of the second gas diffusion layer 326, as shown in FIGS. 4 and 9. In this way, the second frame 330 and the second gas diffusion layer 326 are located between the at least two bottom bond members 314B and the membrane 322 relative to the first axis A1. The at least two top bond members 314T are aligned with the at least two bottom bond members 314B relative to the second axis A2.

In some embodiments, the plurality of bond members 314 is integrated with the membrane assembly 312, as shown in FIG. 9. The plurality of bond members 314 is coated on the outer surfaces 328O, 330O, 324O, 326O of the frames 328, 330 and/or the gas diffusion layers 324, 326. In some embodiments, each of the plurality of bond members 314 is about 5 microns to about 15 microns thick, including any specific thickness or range of thickness included therein.

In some embodiments, the plurality of bond members 314 is formed of a glue or an adhesive. The glue or the adhesive may be a heat-sensitive and pressure-sensitive glue or adhesive. The glue or the adhesive may be a polyolefin-based heat-sensitive and pressure-sensitive glue or adhesive.

As shown in FIG. 4, in some embodiments, the electrochemical cell 310 includes four bond members 314. In other embodiments, the electrochemical cell 310 may include a different and/or any number of bond members 314.

In some embodiments, the outer surface 3280, 330O of the frames 328, 330 is treated with a plasma cleaning. The plasma cleaning removes contaminants from the outer surface 3280, 330O of the frames 328, 330 to enhance adhesion of the plurality of bond members 314 to the frames 328, 330.

The bipolar plates 316, 318 are both formed to include one or more pressure relief channels 332, as shown in FIG. 4. The pressure relief channels 332 receive the bond members 314 therein. Each bipolar plate 316, 318 is formed to include two pressure relief channels 332 on one side thereof spaced apart from one another along the second axis A2. The pressure relief channels 332 ensure that the bipolar plates 316, 318 apply minimal, if any, force to the gas diffusion layers 324, 326, especially at ends of the gas diffusion layers 324, 326. Because there is minimal, if any, force being applied to the gas diffusion layers 324, 326 by the bipolar plates 316, 318, a force applied to the membrane 322 by the gas diffusion layers 324, 326 is thereby minimized. In other words, the shear force applied to the membrane 322 by the gas diffusion layers 324, 326 is negligible.

As shown in FIG. 4, two of the pressure relief channels 332 of the first bipolar plate 316 extend into the first bipolar plate 316 from a second surface 316B thereof toward a first surface 316A opposite the second surface 316B. The first bipolar plate 316 is also formed to include two pressure relief channels 332 extending into the first bipolar plate 316 from the first surface 316A thereof toward the second surface 316B. This allows the electrochemical cell 310 to be stacked with other electrochemical cells 310 to form a stack.

Two of the pressure relief channels 332 of the second bipolar plate 318 extend into the second bipolar plate 318 from a first surface 318A thereof toward a second surface 318B opposite the first surface 318A, as shown in FIG. 4. The second bipolar plate 318 is also formed to include two pressure relief channels 332 extending into the second bipolar plate 318 from the second surface 318B thereof toward the first surface 318A. This allows the electrochemical cell 310 to be stacked with other electrochemical cells 310 to form a stack. The pressure relief channels 332 of the first bipolar plate 316 are aligned with the pressure relief channels 332 of the second bipolar plate 318 relative to the second axis A2, as shown in FIG. 4.

As shown in FIG. 4, the plurality of bond members 314 does not contact or engage the bipolar plates 316, 318. In this way, the force applied to the gas diffusion layers 324, 326 by the bipolar plates 316, 318 is minimized as there is less contact between the bipolar plates 316, 318 and the gas diffusion layers 324, 326.

The bipolar plates 316, 318 are also formed to include gasket channels 334, as shown in FIG. 4. The gasket channels 334 are configured to receive the gaskets 320 therein. Illustratively, a shape and a size of the gasket channels 334 is similar to, or identical to, a shape and a size of the pressure relief channels 332.

As shown in FIG. 5, the membrane assembly 312 includes five components (i.e., the membrane 322, the first gas diffusion layer 324, the second gas diffusion layer 326, the first frame 328, and the second frame 330). To form the membrane assembly 312, the membrane 322, the first gas diffusion layer 324, the second gas diffusion layer 326, the first frame 328, and/or the second frame 330 are adhered, affixed, and/or pressed together, as suggested in FIG. 5. In some embodiments, the components are pressed together via a hot press, a cold press, a mechanical press, a roller press, and/or a hand press.

In some embodiments, the frames 328, 330 and the membrane 322 are affixed together via a glue, an adhesive, and/or a first pressing force. Specifically, the frames 328, 330 are affixed to opposing sides of the membrane 322 with a plurality of adhesive sheets 331, as shown in FIG. 9. In some embodiments, the plurality of adhesive sheets 331 may be referred to as a plurality of layers 331. The plurality of adhesive sheets 331 binds and/or adheres to surrounding components (i.e., the frames 328, 330 and the membrane 322). The plurality of adhesive sheets 331 may be applied to the frames 328, 330 or the membrane 322 in a tape form, a film form, a glue form, a paste form, a liquid form, a pellet form, an atomized form, a spray form, or any other suitable form.

As shown in FIG. 9, at least one of the plurality of adhesive sheets 331 is arranged between the first frame 328 and the membrane 322 relative to the first axis A1. At least one of the plurality of adhesive sheets 331 is arranged between the second frame 330 and the membrane 322 relative to the first axis A1. In this way, the plurality of adhesive sheets 331 is located on each side of the membrane 322 relative to the first axis A1.

In some embodiments, the plurality of adhesive sheets 331 is formed of adhesive materials comprising thermosetting resin, polyimide film, polyimide-based adhesive materials, Upilex, Kaptrex, aliphatic polyamides, Nylonacrylic adhesives, epoxies, polyamides, silicone adhesives, polyolefin film, phenolic butyronitrile film, polyester epoxy, combinations thereof, or other suitable alternatives.

In some embodiments, the plurality of adhesive sheets 331 is formed of a polyolefin-based heat-sensitive and pressure-sensitive glue. In some embodiments, the adhesive sheets 331 is formed of a pressure-sensitive and a temperature-sensitive glue. In some embodiments, the adhesive sheets 331 are activated by a pressure of about 0.5 MPa to about 10 MPa, including any specific or range of pressures comprised therein (e.g., 2 MPa). In some embodiments, the adhesive sheets 331 are activated by a pressure of about 0.5 MPa to about 2 MPa, including any specific or range of pressures comprised therein (e.g., 0.8 MPa). In some embodiments, the adhesive sheets 331 are activated by a temperature of about 100°C to about 130°C, including any specific or range of temperatures comprised therein (e.g., 120°C). In some embodiments, the adhesive sheets 331 are activated by a combination of the pressure and the temperature described herein. In some embodiments, a vacuum is applied to the frames 328, 330 and the membrane 322. In some embodiments, the first pressing force is applied to the frames 328, 330 and the membrane 322 for about 50 seconds to about 100 seconds, including any specific or range of time comprised therein (e.g., 100 seconds).

Illustratively, once the frames 328, 330, the plurality of adhesive sheets 331, and the membrane 322 are stacked relative to one another, as suggested in FIG. 6, the first pressing force is applied to the components to form a membrane-frame component 328, 322, 330. In some embodiments, the first pressing force is applied via a hot press. In some embodiments, the first pressing force is applied via a cold press. In some embodiments, the first pressing force is applied via a mechanical press. In some embodiments, the first pressing force is applied via a hand press. In some embodiments, the first pressing force is applied via a roller press using hot, cold, or room-temperature rollers.

Next, the first gas diffusion layer 324 and the second gas diffusion layer 326 are affixed to the membrane-frame component 328, 322, 330 to form the membrane assembly 312, as shown in FIG. 7. In some embodiments, the gas diffusion layers 324, 326 and the membrane-frame component 328, 322, 330 are affixed together via the adhesive sheets 331 previously applied to the frames 328, 330 and/or the membrane 322 and/or a second pressing force. In some embodiments, the gas diffusion layers 324, 326 and the membrane-frame component 328, 322, 330 are affixed together via a different adhesive than the adhesive sheets 331 and/or the second pressing force. In some embodiments, the gas diffusion layers 324, 326 and the membrane-frame component 328, 322, 330 are affixed together via the plurality of bond members 314 and/or the second pressing force. For example, the plurality of bond members 314 may be applied to the gas diffusion layers 324, 326 and the membrane-frame component 328, 322, 330, and then the second pressure force may be applied.

In some embodiments, the second pressing force is applied via a hot press. In some embodiments, the second pressing force is applied via a cold press. In some embodiments, the second pressing force is applied via a mechanical press. In some embodiments, the second pressing force is applied via a hand press. In some embodiments, the second pressing force is applied via a roller press using hot, cold, or room-temperature rollers.

As shown in FIG. 9, each of the plurality of bond members 314 is applied to the membrane assembly 312 at an interface I between the frame 328, 330 and the gas diffusion layer 324, 326. For example, the first frame 328 is located on each side of the first gas diffusion layer 324 relative to the second axis A2. In this way, there are two interfaces I formed between the first frame 328 and the first gas diffusion layer 324 that are spaced apart from one another along the second axis A2, as shown in FIG. 9. The at least two top bond members 314T are applied to the membrane assembly 312 at these two interfaces I so that each of the at least two top bond members 314T overlaps with the first frame 328 and the first gas diffusion layer 324.

As another example, the second frame 330 is located on each side of the second gas diffusion layer 326 relative to the second axis A2, as shown in FIG. 9. In this way, there are two interfaces I formed between the second frame 330 and the second gas diffusion layer 326 that are spaced apart from one another along the second axis A2. The at least two bottom bond members 314B are applied to the membrane assembly 312 at these two interfaces I so that each of the at least two bottom bond members 314B overlaps with the second frame 330 and the second gas diffusion layer 326.

Because each of the plurality of bond members 314 is located at the interface I between the frame 328, 330 and the gas diffusion layer 324, 326, there is minimal, if any, force applied to the gas diffusion layer 324, 326 by the bipolar plates 316, 318 at the edges of the gas diffusion layer 324, 326. In this way, shearing of the gas diffusion layers 324, 326 is minimized and formation of edge burs is reduced.

After the membrane assembly 312 is formed and the plurality of bond members 314 is arranged on the membrane assembly 312, the membrane assembly 312 is coupled with the first bipolar plate 316 and the second bipolar plate 318 to form the electrochemical cell 310, as shown in FIG. 8.

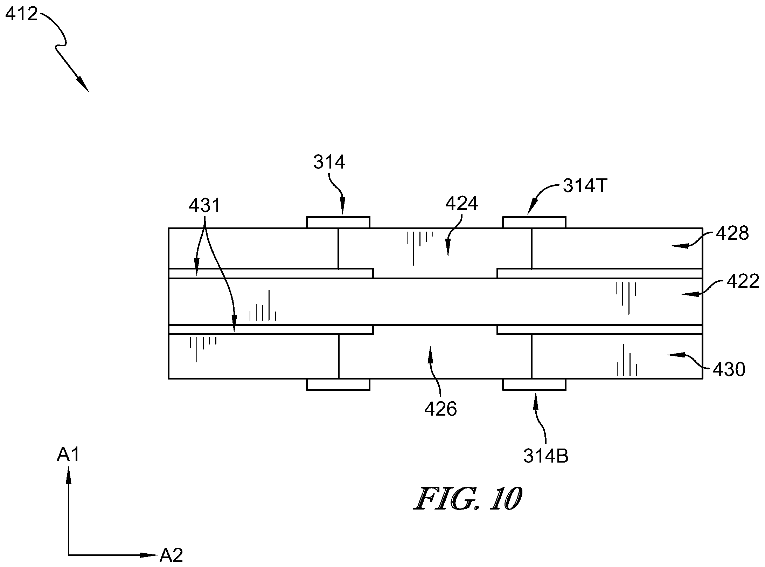

The present disclosure provides an alternative membrane assembly 412 for use with the electrochemical cell 310, as described above. FIG. 10 illustrates another embodiment of the membrane assembly 412 that is substantially similar to the membrane assembly 312. In the absence of disclosure to the contrary, the features and components of the membrane assembly 312 are applicable and present for the membrane assembly 412.

The membrane assembly 412 includes a membrane 422, a first gas diffusion layer 424, a second gas diffusion layer 426, a first frame 428, and/or a second frame 430, as shown in FIG. 10. The first gas diffusion layer 424 and the second gas diffusion layer 426 are located on opposing sides of the membrane 422. The first frame 428 and the second frame 430 are located on opposing sides of the membrane 422. In illustrative embodiments, the membrane assembly 412 is integrated into a single component, as shown in FIG. 10.

The first gas diffusion layer 424 and the second gas diffusion layer 426 are spaced apart from one another along the first axis A1 to locate the membrane 422 therebetween, as shown in FIG. 10. The first frame 428 and the second frame 430 are spaced apart from one another along the first axis A1 to locate the membrane 422 therebetween.

As shown in FIG. 10, the membrane assembly 412 further includes a plurality of layers 431. In some embodiments, the plurality of layers 431 may be referred to as a plurality of protection layers 431. The plurality of protection layers 431 may comprise polyimide, polyvinyl fluoride, polyethylene naphthalate, or any other suitable material or polymer.

As shown in FIG. 10, at least one of the plurality of layers 431 is arranged between the first frame 428 and the membrane 422 relative to the first axis A1. At least one of the plurality of layers 431 is arranged between the second frame 430 and the membrane 422 relative to the first axis A1. In this way, the plurality of layers 431 is located on each side of the membrane 422 relative to the first axis A1.

The plurality of layers 431 overlaps with the gas diffusion layers 424, 426, as shown in FIG. 10. This overlapping may protect the membrane 422 from burs formed at the edges of the gas diffusion layers 424, 426. In this way, the plurality of layers 431 reduces or minimizes damage to the membrane 422 due to shear force. The plurality of layers 431 ensures that titanium fibers and carbon fibers at edges of the gas diffusion layers 424, 426 do not puncture and damage the membrane 422. Each of the plurality of layers 431 may have a thickness defined along the first axis A1 of about 5 microns to about 40 microns, including any specific or range of thicknesses comprised therein.

In such an embodiment, the plurality of bond members 314 and the pressure relief channels 332 may be omitted if the overlapping of the plurality of layers 431 with the gas diffusion layers 424, 426 provides sufficient protection for the membrane 422.

The frames 428, 430, the plurality of layers 431, and the membrane 422 are affixed together via a glue, an adhesive, and/or a first pressing force, as described above. Specifically, the frames 428, 430 and the plurality of layers 431 are affixed to opposing sides of the membrane 422, as shown in FIG. 10.

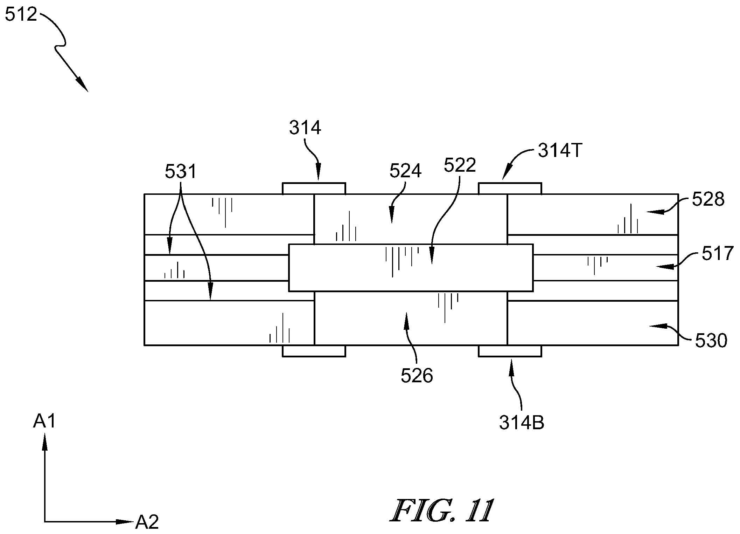

The present disclosure provides an alternative membrane assembly 512 for use with the electrochemical cell 310, as described above. FIG. 11 illustrates another embodiment of the membrane assembly 512 that is substantially similar to the membrane assembly 312, 412. In the absence of disclosure to the contrary, the features and components of the membrane assembly 312, 412 are applicable and present for the membrane assembly 512.

Illustratively, the membrane assembly 512 includes a membrane 522, a first gas diffusion layer 524, a second gas diffusion layer 526, a first frame 528, and/or a second frame 530, as shown in FIG. 11. The first gas diffusion layer 524 and the second gas diffusion layer 526 are located on opposing sides of the membrane 522. The first frame 528 and the second frame 530 are located on opposing sides of the membrane 522. In illustrative embodiments, the membrane assembly 512 is integrated into a single component, as shown in FIG. 11.

The first gas diffusion layer 524 and the second gas diffusion layer 526 are spaced apart from one another along the first axis A1 to locate the membrane 522 therebetween, as shown in FIG. 11. The first frame 528 and the second frame 530 are spaced apart from one another along the first axis A1 to locate the membrane 522 therebetween.

The membrane 522 of the membrane assembly 512 is illustratively shorter than the membrane 322 of the membrane assembly 312, as shown in FIG. 11. Because of this, a membrane frame 517 is included in the membrane assembly 512. The membrane frame 517 is located on both sides of the membrane 522 relative to the second axis A2. The membrane frame 517 is located between the first frame 528 and the second frame 530 relative to the first axis A1.

In some embodiments, the frames 528, 530, the membrane frame 517, and the membrane 522 are affixed together via a glue, an adhesive, and/or a first pressing force. Specifically, the frames 528, 530 are affixed to opposing sides of the membrane 522 and the membrane frame 517 with a plurality of adhesive sheets 531, as shown in FIG. 11. The plurality of adhesive sheets 531 binds and/or adheres to surrounding components (i.e., the frames 528, 530, the membrane frame 517, and the membrane 522).

As shown in FIG. 11, at least one of the plurality of adhesive sheets 531 is arranged between the first frame 528 and the membrane 522/the membrane frame 517 relative to the first axis A1. At least one of the plurality of adhesive sheets 531 is arranged between the second frame 530 and the membrane 522/the membrane frame 517 relative to the first axis A1. In this way, the plurality of adhesive sheets 531 is located on each side of the membrane 522 relative to the first axis A1. Next, the first gas diffusion layer 524 and the second gas diffusion layer 526 are affixed to the membrane-frame component 528, 522, 530, 517 to form the membrane assembly 512, as shown in FIG. 11.

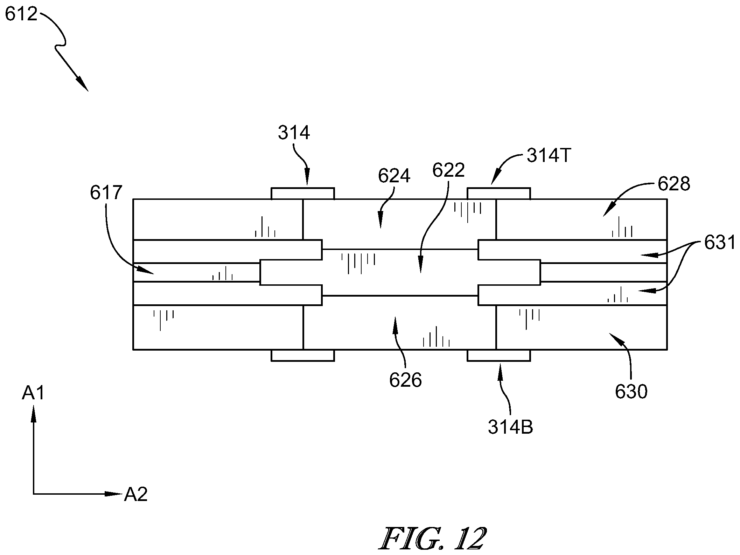

The present disclosure provides an alternative membrane assembly 612 for use with the electrochemical cell 310, as described above. FIG. 12 illustrates another embodiment of the membrane assembly 612 that is substantially similar to the membrane assembly 312, 412, 512. In the absence of disclosure to the contrary, the features and components of the membrane assembly 312, 412, 512 are applicable and present for the membrane assembly 612.

Illustratively, the membrane assembly 612 includes a membrane 622, a first gas diffusion layer 624, a second gas diffusion layer 626, a first frame 628, and/or a second frame 630, as shown in FIG. 12. The first gas diffusion layer 624 and the second gas diffusion layer 626 are located on opposing sides of the membrane 622. The first frame 628 and the second frame 630 are located on opposing sides of the membrane 622. In illustrative embodiments, the membrane assembly 612 is integrated into a single component, as shown in FIG. 12.

The first gas diffusion layer 624 and the second gas diffusion layer 626 are spaced apart from one another along the first axis A1 to locate the membrane 622 therebetween, as shown in FIG. 12. The first frame 628 and the second frame 630 are spaced apart from one another along the first axis A1 to locate the membrane 622 therebetween.

The membrane 622 of the membrane assembly 612 is illustratively shorter than the membrane 322 of the membrane assembly 312, as shown in FIG. 12. Because of this, a membrane frame 617 is included in the membrane assembly 612. The membrane frame 617 is located on both sides of the membrane 622 relative to the second axis A2. The membrane frame 617 is located between the first frame 628 and the second frame 630 relative to the first axis A1.

As shown in FIG. 12, the membrane assembly 612 further includes a plurality of layers 631. In some embodiments, the plurality of layers 631 may be referred to as a plurality of protection layers 631. The plurality of protection layers 631 may comprise polyimide, polyvinyl fluoride, polyethylene naphthalate, or any other suitable material or polymer. Each of the plurality of layers 631 may have a thickness defined along the first axis A1 of about 5 microns to about 40 microns, including any specific or range of thicknesses comprised therein.

In some embodiments, the frames 628, 630, the membrane frame 617, the plurality of layers 631, and the membrane 622 are affixed together via a glue, an adhesive, and/or a first pressing force.

As shown in FIG. 12, at least one of the plurality of layers 631 is arranged between the first frame 628 and the membrane 622/the membrane frame 617 relative to the first axis A1. At least one of the plurality of layers 631 is arranged between the second frame 630 and the membrane 622/the membrane frame 617 relative to the first axis A1. In this way, the plurality of layers 631 is located on each side of the membrane 622 relative to the first axis A1. Next, the first gas diffusion layer 624 and the second gas diffusion layer 626 are affixed to the membrane-frame component 628, 622, 630, 617 to form the membrane assembly 612, as shown in FIG. 12.

As compared to the membrane assembly 312, in the membrane assembly 612, the plurality of layers 631 overlaps with the gas diffusion layers 624, 626, as shown in FIG. 12. This overlapping may protect the membrane 622 from burs formed at the edges of the gas diffusion layers 624, 626. In this way, the plurality of layers 631 reduces or minimizes damage to the membrane 622 due to shear force. The plurality of layers 631 ensures that titanium fibers and carbon fibers at the edges of the gas diffusion layers 624, 626 do not puncture and damage the membrane 622.

In such an embodiment, the plurality of bond members 314 and the pressure relief channels 332 may be omitted if the overlapping of the plurality of layers 631 with the gas diffusion layers 624, 626 provides sufficient protection for the membrane 622.

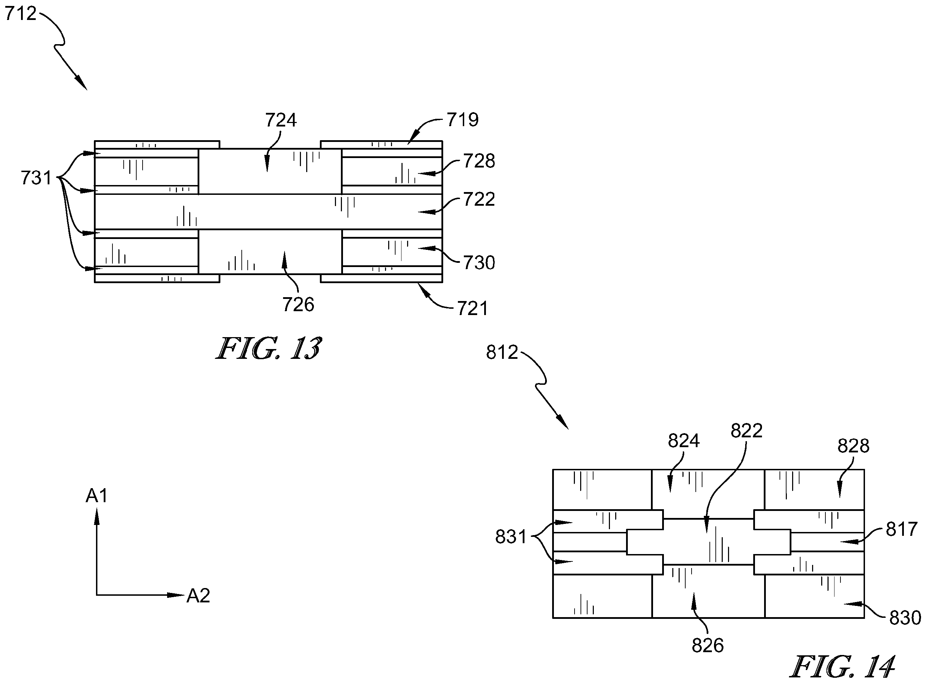

The present disclosure provides an alternative membrane assembly 712 for use with the electrochemical cell 310, as described above. FIG. 13 illustrates another embodiment of the membrane assembly 712 that is substantially similar to the membrane assembly 312, 412, 512, 612. In the absence of disclosure to the contrary, the features and components of the membrane assembly 312, 412, 512, 612 are applicable and present for the membrane assembly 712.

Illustratively, the membrane assembly 712 includes a membrane 722, a first gas diffusion layer 724, a second gas diffusion layer 726, a first frame 728, and/or a second frame 730, as shown in FIG. 13. The first gas diffusion layer 724 and the second gas diffusion layer 726 are located on opposing sides of the membrane 722. The first frame 728 and the second frame 730 are located on opposing sides of the membrane 722. In illustrative embodiments, the membrane assembly 712 is integrated into a single component, as shown in FIG. 13.

The first gas diffusion layer 724 and the second gas diffusion layer 726 are spaced apart from one another along the first axis A1 to locate the membrane 722 therebetween, as shown in FIG. 13. The first frame 728 and the second frame 730 are spaced apart from one another along the first axis A1 to locate the membrane 722 therebetween.

In some embodiments, the membrane assembly 712 further includes a third frame 719 and a fourth frame 721, as shown in FIG. 13. The third frame 719 is located on top of the first frame 728 and the first gas diffusion layer 724 to overlap with both of the first frame 728 and the first gas diffusion layer 724. The first frame 728 and the first gas diffusion layer 724 are located between the third frame 719 and the membrane 722 relative to the first axis A1. The fourth frame 721 is located on bottom of the second frame 730 and the second gas diffusion layer 726 to overlap with both of the second frame 730 and the second gas diffusion layer 726. The second frame 730 and the second gas diffusion layer 726 are located between the fourth frame 721 and the membrane 722 relative to the first axis A1.

In some embodiments, the frames 728, 730 and the membrane 722 are affixed together via a glue, an adhesive, and/or a first pressing force. Specifically, the frames 728, 730 are affixed to opposing sides of the membrane 722 with a plurality of adhesive sheets 731, as shown in FIG. 13. The plurality of adhesive sheets 731 binds and/or adheres to surrounding components (i.e., the frames 728, 730 and the membrane 722).

As shown in FIG. 13, at least one of the plurality of adhesive sheets 731 is arranged between the first frame 728 and the membrane 722 relative to the first axis A1. At least one of the plurality of adhesive sheets 731 is arranged between the second frame 730 and the membrane 722 relative to the first axis A1. In this way, the plurality of adhesive sheets 731 is located on each side of the membrane 722 relative to the first axis A1. Next, the first gas diffusion layer 724 and the second gas diffusion layer 726 are affixed to the membrane-frame component 728, 722, 730. Then, the third frame 719 and the fourth frame 721 are affixed to the frames 728, 730 and the gas diffusion layers 724, 726 with the plurality of adhesive sheets 731. At least one of the plurality of adhesive sheets 731 is arranged between the first frame 728 and the third frame 719 relative to the first axis A1. At least one of the plurality of adhesive sheets 731 is arranged between the second frame 730 and the fourth frame 721 relative to the first axis A1.

In such an embodiment, the frames 719, 721 may act of the plurality of bond members 314. In this way, there is minimal, if any, force applied to the gas diffusion layer 724, 726 by the bipolar plates 316, 318 at the edges of the gas diffusion layer 724, 726 such that shearing of the gas diffusion layer 724, 726 is minimized and formation of edge burs is reduced.

The present disclosure provides an alternative membrane assembly 812 for use with the electrochemical cell 310, as described above. FIG. 14 illustrates another embodiment of the membrane assembly 812 that is substantially similar to the membrane assembly 312, 412, 512, 612, 712. In the absence of disclosure to the contrary, the features and components of the membrane assembly 312, 412, 512, 612, 712 are applicable and present for the membrane assembly 812.

Illustratively, the membrane assembly 812 includes a membrane 822, a first gas diffusion layer 824, a second gas diffusion layer 826, a first frame 828, and/or a second frame 830, as shown in FIG. 14. The first gas diffusion layer 824 and the second gas diffusion layer 826 are located on opposing sides of the membrane 822. The first frame 828 and the second frame 830 are located on opposing sides of the membrane 822. In illustrative embodiments, the membrane assembly 812 is integrated into a single component, as shown in FIG. 14.

The first gas diffusion layer 824 and the second gas diffusion layer 826 are spaced apart from one another along the first axis A1 to locate the membrane 822 therebetween, as shown in FIG. 14. The first frame 828 and the second frame 830 are spaced apart from one another along the first axis A1 to locate the membrane 822 therebetween.

The membrane 822 of the membrane assembly 812 is illustratively shorter than the membrane 322 of the membrane assembly 312, as shown in FIG. 14. Because of this, a membrane frame 817 is included in the membrane assembly 812. The membrane frame 817 is located on both sides of the membrane 822 relative to the second axis A2. The membrane frame 817 is located between the first frame 828 and the second frame 830 relative to the first axis A1.

As shown in FIG. 14, the membrane assembly 812 further includes a plurality of layers 831. In some embodiments, the plurality of layers 831 may be referred to as a plurality of protection layers 831. The plurality of protection layers 831 may comprise polyimide, polyvinyl fluoride, polyethylene naphthalate, or any other suitable material or polymer. Each of the plurality of layers 831 may have a thickness defined along the first axis A1 of about 5 microns to about 40 microns, including any specific or range of thicknesses comprised therein.

In some embodiments, the frames 828, 830, the membrane frame 817, the plurality of layers 831, and the membrane 822 are affixed together via a glue, an adhesive, and/or a first pressing force.

As shown in FIG. 14, at least one of the plurality of layers 831 is arranged between the first frame 828 and the membrane 822/the membrane frame 817 relative to the first axis A1. At least one of the plurality of layers 831 is arranged between the second frame 830 and the membrane 822/the membrane frame 817 relative to the first axis A1. In this way, the plurality of layers 831 is located on each side of the membrane 822 relative to the first axis A1. Next, the first gas diffusion layer 824 and the second gas diffusion layer 826 are affixed to the membrane-frame component 828, 822, 830, 817 to form the membrane assembly 812, as shown in FIG. 14.

As compared to the membrane assembly 312, in the membrane assembly 812, the plurality of layers 831 overlaps with the gas diffusion layers 824, 826, as shown in FIG. 14. This overlapping may protect the membrane 822 from burs formed at the edges of the gas diffusion layers 824, 826. In this way, the plurality of layers 831 reduces or minimizes damage to the membrane 822 due to shear force. The plurality of layers 831 ensures that titanium fibers and carbon fibers at the edges of the gas diffusion layers 824, 826 do not puncture and damage the membrane 822. In such an embodiment, the plurality of bond members 314 and the pressure relief channels 332 may be omitted.

The following described aspects of the present invention are contemplated and nonlimiting:

A first aspect of the present invention relates to an electrochemical cell. The electrochemical cell comprises an integrated membrane assembly, a first bipolar plate, and a second bipolar plate. The integrated membrane assembly includes a first gas diffusion layer, a second gas diffusion layer spaced apart from the first gas diffusion layer relative to a first axis, a membrane located between the first gas diffusion layer and the second gas diffusion layer, and a plurality of bond members adhered to the first gas diffusion layer or the second gas diffusion layer. The first bipolar plate is arranged on a first side of the integrated membrane assembly relative to the first axis. The first bipolar plate is formed to include at least one first pressure relief channel. The second bipolar plate is arranged on a second side of the integrated membrane assembly relative to the first axis. The second bipolar plate is formed to include at least one second pressure relief channel. Each of the plurality of bond members is located in a corresponding one of the at least one first pressure relief channel or the at least one second pressure relief channel to minimize forces acting upon the first and second gas diffusion layers by the first and second bipolar plates to thereby minimize shear forces applied to the membrane by the first and second gas diffusion layers.

A second aspect of the present invention relates to a method of assembling an electrochemical cell. The method of assembling the electrochemical cell comprises stacking a first frame, a membrane, and a second frame on top of one another; fixing the first frame, the membrane, and the second frame to one another to form a membrane-frame component; stacking a first gas diffusion layer, the membrane-frame component, and a second gas diffusion layer on top of one another; fixing the first gas diffusion layer, the membrane-frame component, and the second gas diffusion layer to one another to form an integrated membrane assembly; adhering at least one top bond member to outer surfaces of the first frame and the first gas diffusion layer of the integrated membrane assembly; adhering at least one bottom bond member to outer surfaces of the second frame and the second gas diffusion layer of the integrated membrane assembly; coupling a first bipolar plate to the integrated membrane assembly so that the at least one top bond member is received by at least one first pressure relief channel formed in the first bipolar plate; and coupling a second bipolar plate to the integrated membrane assembly so that the at least one bottom bond member is received by at least one second pressure relief channel formed in the second bipolar plate.

In the first aspect of the present invention, the integrated membrane assembly may further include a first frame and a second frame spaced apart from the first frame relative to the first axis. In the first aspect of the present invention, the first frame may be located on each side of the first gas diffusion layer relative to a second axis that is perpendicular to the first axis and the second frame may be located on each side of the second gas diffusion layer relative to the second axis.

In the first aspect of the present invention, a first interface may be formed between the first gas diffusion layer and the first frame, and wherein a second interface may be formed between the second gas diffusion layer and the second frame. In the first aspect of the present invention, the plurality of bond members may include a top bond member and a bottom bond member, and wherein the top bond member may be adhered to the first gas diffusion layer and the first frame at the first interface and the bottom bond member may be adhered to the second gas diffusion layer and the second frame at the second interface.

In the first aspect of the present invention, the top bond member may be located on an outer surface of the first gas diffusion layer and an outer surface of the first frame to locate the first gas diffusion layer and the first frame between the top bond member and the membrane relative to the first axis. In the first aspect of the present invention, the bottom bond member may be located on an outer surface of the second gas diffusion layer and an outer surface of the second frame to locate the second gas diffusion layer and the second frame between the bottom bond member and the membrane relative to the first axis.

In the first aspect of the present invention, the top bond member may be received in the at least one first pressure relief channel of the first bipolar plate and the bottom bond member may be received in the at least one second pressure relief channel of the second bipolar plate. In the first aspect of the present invention, the top bond member may not contact the first bipolar plate and the bottom bond member may not contact the second bipolar plate. In the first aspect of the present invention, the top bond member and the bottom bond member may be aligned with one another along the second axis.

In the first aspect of the present invention, the plurality of bond members may include a first top bond member and a second top bond member spaced apart from one another relative to the second axis and a first bottom bond member and a second bottom bond member spaced apart from one another relative to the second axis. In the first aspect of the present invention, the first top bond member may be coupled to the first frame and the first gas diffusion layer at a first interface thereof, the second top bond member may be coupled to the first frame and the first gas diffusion layer at a second interface thereof, the first bottom bond member may be coupled to the second frame and the second gas diffusion layer at a first interface thereof, and the second bottom bond member may be coupled to the second frame and the second gas diffusion layer at a second interface thereof.

In the first aspect of the present invention, the at least one first pressure relief channel may include a first top pressure relief channel that receives the first top bond member and a second top pressure relief channel that receives the second top bond member. In the first aspect of the present invention, the at least one second pressure relief channel may include a first bottom pressure relief channel that receives the first bottom bond member and a second bottom pressure relief channel that receives the second bottom bond member.

In the first aspect of the present invention, each of the plurality of bond members may not contact the first bipolar plate or the second bipolar plate. In the first aspect of the present invention, the first bipolar plate may include a first surface and a second surface opposite the first surface relative to the first axis, the at least one first pressure relief channel may extend into the first bipolar plate from the second surface toward the first surface. In the first aspect of the present invention, the second bipolar plate may include a first surface and a second surface opposite the first surface of the second bipolar plate relative to the first axis, the at least one second pressure relief channel may extend into the second bipolar plate from the first surface of the second bipolar plate toward the second surface of the second bipolar plate.

In the second aspect of the present invention, the step of fixing the first gas diffusion layer, the membrane-frame component, and the second gas diffusion layer to one another may include forming a first interface between the first gas diffusion layer and the first frame and forming a second interface between the second gas diffusion layer and the second frame.

In the second aspect of the present invention, the step of adhering at least one top bond member to outer surfaces of the first frame and the first gas diffusion layer may include adhering the at least one top bond member to the first frame and the first gas diffusion layer at the first interface.

In the second aspect of the present invention, the step of adhering at least one bottom bond member to outer surfaces of the second frame and the second gas diffusion layer may include adhering the at least one bottom bond member to the second frame and the second gas diffusion layer at the second interface.

In the second aspect of the present invention, the at least one top bond member may not contact the first bipolar plate and the at least one bottom bond member may not contact the second bipolar plate. In the second aspect of the present invention, the at least one top bond member and the at least one bottom bond member may be aligned with one another.

In the second aspect of the present invention, the method may further comprise minimizing forces acting upon the first and second gas diffusion layers by the first and second bipolar plates via the at least one first pressure relief channel and the at least one second pressure relief channel.

The features illustrated or described in connection with one exemplary embodiment may be combined with any other feature or element of any other embodiment described herein. Such modifications and variations are intended to be included within the scope of the present disclosure. Further, a person skilled in the art will recognize that terms commonly known to those skilled in the art may be used interchangeably herein.

The above embodiments are described in sufficient detail to enable those skilled in the art to practice what is claimed and it is to be understood that logical, mechanical, and electrical changes may be made without departing from the spirit and scope of the claims. The detailed description is, therefore, not to be taken in a limiting sense.

As used herein, an element or step recited in the singular and proceeded with the word "a" or "an" should be understood as not excluding plural of said elements or steps, unless such exclusion is explicitly stated. Furthermore, references to "one embodiment" of the presently described subject matter are not intended to be interpreted as excluding the existence of additional embodiments that also incorporate the recited features. Specified numerical ranges of units, measurements, and/or values comprise, consist essentially or, or consist of all the numerical values, units, measurements, and/or ranges including or within those ranges and/or endpoints, whether those numerical values, units, measurements, and/or ranges are explicitly specified in the present disclosure or not.

Unless defined otherwise, technical and scientific terms used herein have the same meaning as is commonly understood by one of ordinary skill in the art to which this disclosure belongs. The terms "first," "second," "third" and the like, as used herein do not denote any order or importance, but rather are used to distinguish one element from another. The term "or" is meant to be inclusive and mean either or all of the listed items. In addition, the terms "connected" and "coupled" are not restricted to physical or mechanical connections or couplings, and can include electrical connections or couplings, whether direct or indirect.

Moreover, unless explicitly stated to the contrary, embodiments "comprising," "including," or "having" an element or a plurality of elements having a particular property may include additional such elements not having that property. The term "comprising" or "comprises" refers to a composition, compound, formulation, or method that is inclusive and does not exclude additional elements, components, and/or method steps. The term "comprising" also refers to a composition, compound, formulation, or method embodiment of the present disclosure that is inclusive and does not exclude additional elements, components, or method steps.

The phrase "consisting of" or "consists of" refers to a compound, composition, formulation, or method that excludes the presence of any additional elements, components, or method steps. The term "consisting of" also refers to a compound, composition, formulation, or method of the present disclosure that excludes the presence of any additional elements, components, or method steps.

The phrase "consisting essentially of" or "consists essentially of' refers to a composition, compound, formulation, or method that is inclusive of additional elements, components, or method steps that do not materially affect the characteristic(s) of the composition, compound, formulation, or method. The phrase "consisting essentially of' also refers to a composition, compound, formulation, or method of the present disclosure that is inclusive of additional elements, components, or method steps that do not materially affect the characteristic(s) of the composition, compound, formulation, or method steps.

Approximating language, as used herein throughout the specification and claims, may be applied to modify any quantitative representation that could permissibly vary without resulting in a change in the basic function to which it is related. Accordingly, a value modified by a term or terms, such as "about," and "substantially" is not to be limited to the precise value specified. In some instances, the approximating language may correspond to the precision of an instrument for measuring the value. Here and throughout the specification and claims, range limitations may be combined and/or interchanged. Such ranges are identified and include all the sub-ranges contained therein unless context or language indicates otherwise.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances, the modified term may sometimes not be appropriate, capable, or suitable.

It is to be understood that the above description is intended to be illustrative, and not restrictive. For example, the above-described embodiments (and/or aspects thereof) may be used individually, together, or in combination with each other. In addition, many modifications may be made to adapt a particular situation or material to the teachings of the subject matter set forth herein without departing from its scope. While the dimensions and types of materials described herein are intended to define the parameters of the disclosed subject matter, they are by no means limiting and are exemplary embodiments. Many other embodiments will be apparent to those of skill in the art upon reviewing the above description. The scope of the subject matter described herein should, therefore, be determined with reference to the appended claims, along with the full scope of equivalents to which such claims are entitled.

This written description uses examples to disclose several embodiments of the subject matter set forth herein, including the best mode, and also to enable a person of ordinary skill in the art to practice the embodiments of disclosed subject matter, including making and using the devices or systems and performing the methods. The patentable scope of the subject matter described herein is defined by the claims, and may include other examples that occur to those of ordinary skill in the art. Such other examples are intended to be within the scope of the claims if they have structural elements that do not differ from the literal language of the claims, or if they include equivalent structural elements with insubstantial differences from the literal languages of the claims.

While only certain features of the invention have been illustrated and described herein, many modifications and changes will occur to those skilled in the art. It is, therefore, to be understood that the appended claims are intended to cover all such modifications and changes as fall within the true spirit of the invention.

## Claims

1. An electrochemical cell comprising:
an integrated membrane assembly including a first gas diffusion layer, a second gas diffusion layer spaced apart from the first gas diffusion layer relative to a first axis, a membrane located between the first gas diffusion layer and the second gas diffusion layer, and a plurality of bond members adhered to the first gas diffusion layer or the second gas diffusion layer,
a first bipolar plate arranged on a first side of the integrated membrane assembly relative to the first axis, the first bipolar plate formed to include at least one first pressure relief channel, and
a second bipolar plate arranged on a second side of the integrated membrane assembly relative to the first axis, the second bipolar plate formed to include at least one second pressure relief channel,
wherein each of the plurality of bond members is located in a corresponding one of the at least one first pressure relief channel or the at least one second pressure relief channel to minimize forces acting upon the first and second gas diffusion layers by the first and second bipolar plates to thereby minimize shear forces applied to the membrane by the first and second gas diffusion layers.

2. The electrochemical cell of claim 1, wherein the integrated membrane assembly further includes a first frame and a second frame spaced apart from the first frame relative to the first axis, and wherein the first frame is located on each side of the first gas diffusion layer relative to a second axis that is perpendicular to the first axis and the second frame is located on each side of the second gas diffusion layer relative to the second axis.

3. The electrochemical cell of claim 2, wherein a first interface is formed between the first gas diffusion layer and the first frame, and wherein a second interface is formed between the second gas diffusion layer and the second frame.

4. The electrochemical cell of claim 3, wherein the plurality of bond members includes a top bond member and a bottom bond member, and wherein the top bond member is adhered to the first gas diffusion layer and the first frame at the first interface and the bottom bond member is adhered to the second gas diffusion layer and the second frame at the second interface.

5. The electrochemical cell of claim 4, wherein the top bond member is located on an outer surface of the first gas diffusion layer and an outer surface of the first frame to locate the first gas diffusion layer and the first frame between the top bond member and the membrane relative to the first axis, and wherein the bottom bond member is located on an outer surface of the second gas diffusion layer and an outer surface of the second frame to locate the second gas diffusion layer and the second frame between the bottom bond member and the membrane relative to the first axis.

6. The electrochemical cell of claim 4 or 5, wherein the top bond member is received in the at least one first pressure relief channel of the first bipolar plate and the bottom bond member is received in the at least one second pressure relief channel of the second bipolar plate.

7. The electrochemical cell of claim 4, 5 or 6, wherein the top bond member does not contact the first bipolar plate and the bottom bond member does not contact the second bipolar plate.

8. The electrochemical cell of any one of claims 4 to 7, wherein the top bond member and the bottom bond member are aligned with one another along the second axis.

9. The electrochemical cell of claim 2, wherein the plurality of bond members includes a first top bond member and a second top bond member spaced apart from one another relative to the second axis and a first bottom bond member and a second bottom bond member spaced apart from one another relative to the second axis.

10. The electrochemical cell of claim 9, wherein the first top bond member is coupled to the first frame and the first gas diffusion layer at a first interface thereof, the second top bond member is coupled to the first frame and the first gas diffusion layer at a second interface thereof, the first bottom bond member is coupled to the second frame and the second gas diffusion layer at a first interface thereof, and the second bottom bond member is coupled to the second frame and the second gas diffusion layer at a second interface thereof;
optionally wherein the at least one first pressure relief channel includes a first top pressure relief channel that receives the first top bond member and a second top pressure relief channel that receives the second top bond member, and wherein the at least one second pressure relief channel includes a first bottom pressure relief channel that receives the first bottom bond member and a second bottom pressure relief channel that receives the second bottom bond member.

11. The electrochemical cell of claim 1, wherein each of the plurality of bond members does not contact the first bipolar plate or the second bipolar plate.

12. The electrochemical cell of claim **1,** wherein the first bipolar plate includes a first surface and a second surface opposite the first surface relative to the first axis, the at least one first pressure relief channel extends into the first bipolar plate from the second surface toward the first surface, and wherein the second bipolar plate includes a first surface and a second surface opposite the first surface of the second bipolar plate relative to the first axis, the at least one second pressure relief channel extends into the second bipolar plate from the first surface of the second bipolar plate toward the second surface of the second bipolar plate.

13. A method of assembling an electrochemical cell comprising:
stacking a first frame, a membrane, and a second frame on top of one another,
fixing the first frame, the membrane, and the second frame to one another to form a membrane-frame component,
stacking a first gas diffusion layer, the membrane-frame component, and a second gas diffusion layer on top of one another,
fixing the first gas diffusion layer, the membrane-frame component, and the second gas diffusion layer to one another to form an integrated membrane assembly,
adhering at least one top bond member to outer surfaces of the first frame and the first gas diffusion layer of the integrated membrane assembly,
adhering at least one bottom bond member to outer surfaces of the second frame and the second gas diffusion layer of the integrated membrane assembly,
coupling a first bipolar plate to the integrated membrane assembly so that the at least one top bond member is received by at least one first pressure relief channel formed in the first bipolar plate, and
coupling a second bipolar plate to the integrated membrane assembly so that the at least one bottom bond member is received by at least one second pressure relief channel formed in the second bipolar plate.

14. The method of claim 13, wherein the step of fixing the first gas diffusion layer, the membrane-frame component, and the second gas diffusion layer to one another includes forming a first interface between the first gas diffusion layer and the first frame and forming a second interface between the second gas diffusion layer and the second frame; optionally wherein:
(i) the step of adhering at least one top bond member to outer surfaces of the first frame and the first gas diffusion layer includes adhering the at least one top bond member to the first frame and the first gas diffusion layer at the first interface; and/or
(ii) the step of adhering at least one bottom bond member to outer surfaces of the second frame and the second gas diffusion layer includes adhering the at least one bottom bond member to the second frame and the second gas diffusion layer at the second interface.

15. The method of claims 13 or 14, wherein:
(i) the at least one top bond member does not contact the first bipolar plate and the at least one bottom bond member does not contact the second bipolar plate; and/or
(ii) the at least one top bond member and the at least one bottom bond member are aligned with one another; and/or
(iii) the method further comprises minimizing forces acting upon the first and second gas diffusion layers by the first and second bipolar plates via the at least one first pressure relief channel and the at least one second pressure relief channel.
